(19) **Europäisches Patentamt / European Patent Office / Office européen des brevets**

(11) **EP 1 895 686 A1**

(12) # EUROPEAN PATENT APPLICATION

(43) Date of publication:
**05.03.2008 Bulletin 2008/10**

(51) Int Cl.:
***H04B 10/00*** *(2006.01)*

(21) Application number: **07113303.7**

(22) Date of filing: **27.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **28.08.2006 FR 0653480**

(71) Applicant: **Alcatel Lucent
75008 Paris (FR)**

(72) Inventors:
- **Pecci, Pascal**
  **91700, SAINTE GENEVIEVE DES BOIS (FR)**
- **Courtois, Olivier**
  **91620, LA VILLE DU BOIS (FR)**
- **Piriou, Laurence**
  **91680, BRUYERES-LE-CHATEL (FR)**

(74) Representative: **Shamsaei Far, Hassan et al
Alcatel Lucent
Intellectual Property & Standards
54 rue La Boétie
75008 Paris (FR)**

(54) **Method of determining an optimum path in an optical telecommunications network**

(57) This invention concerns the field of telecommunication networks using optical fibres. The invention relates to a method of determining a connection path between two points in an optical network comprising several paths to connect said two points, each path comprising optical fibre spans and power amplifiers, said method comprising different steps depending on the degree of knowledge of network optical data. This data consists of the optical losses $L_i$ in optical fibre spans, the maximum allowable input power IP into said spans and the maximum output power $P_A$ from the amplifiers.

FIG. 3

**Description**

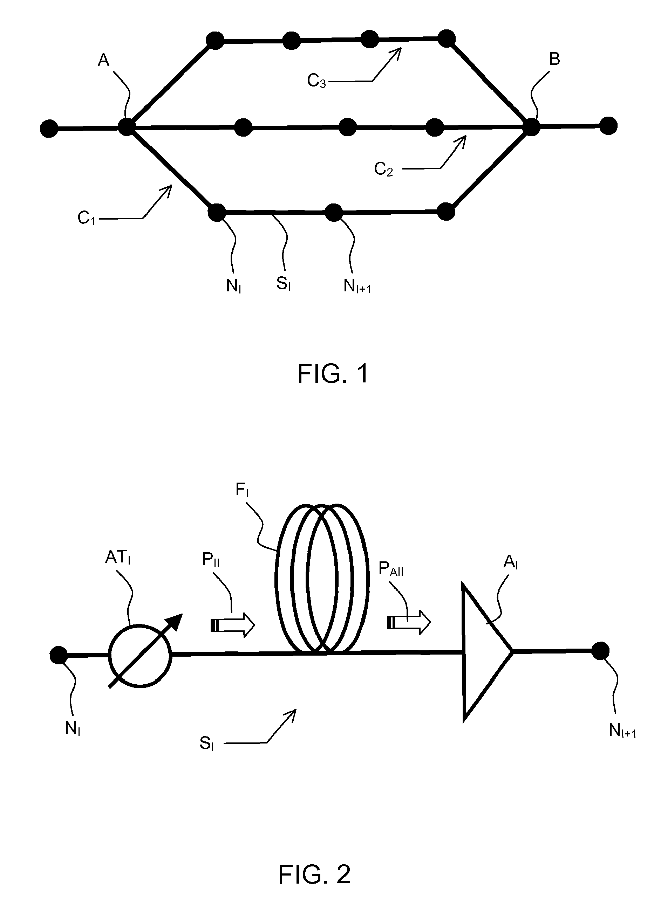

This invention concerns the field of telecommunication networks using optical fibres. A telecommunications network is conventionally composed of optical signal emission and reception nodes and optical fibre spans between the different nodes. There may be several possible paths for transferring a signal from one node to another in a telecommunications network. Thus on figure 1, node A can be connected to node B by using either path C1, path C2 or path C3, each path comprising nodes $N_l$ and spans $S_l$. The choice of the best possible path is important. It will control the number and type of optical regenerators to be set up and the final performances of the span.
A path is defined by the following three main characteristics:

- the number of spans;
- the type of fibre making up each span;
- the attenuation of each span expressed in dB.
The attenuation of the fibre and the length of the span control the level of optical losses $L_l$ of the span. This level of losses is usually expressed in deciBels. The type of fibre also controls the maximum allowable input power IP into the optical fibre.
Optical amplifiers $A_l$ are provided at the node so that a signal emitted by a node can reach the next node while remaining at acceptable power levels. One of the main characteristics of an optical amplifier is its maximum output power $P_A$ that is usually expressed in dBm.
Therefore as shown in figure 2, a span $S_l$ comprises mainly an optical fibre $F_l$, a variable attenuation device $AT_l$ and an optical amplifier $A_l$. The optical signals passing through the span are shown by the arrows on this figure. The signal power at the input to the optical fibre is equal to $P_{Il}$, and the signal power at the input to the optical amplifier is equal to $P_{All}$.

When there are several possible paths to connect two nodes together, a criterion has to be determined for choosing the best of them. Simple elementary criteria can be used, for example such as the shortest path or the minimum number of spans connecting the two nodes. However, these rudimentary criteria are not sufficient to make a judicious choice between the different possible paths. In particular, if a selected path comprises a span with a large length of optical fibres, it is possible that the signal cannot be transmitted without excessive attenuation. One good criterion is to determine the Optical Signal to Noise Ratio (OSNR) on the different possible paths connecting two nodes and to select the path with the best OSNR.
However, not all network parameters are necessarily known for a large number of reasons related essentially to the network history. Thus, the method of determining a connection path between two points in an optical network according to the invention is based on several possible assumptions that depend on the extent of knowledge of the different network parameters.

More precisely, the purpose of the invention is a method of determining a connection path between two points in an optical network comprising several paths to connect said two points, each path comprising optical fibre spans and power amplifiers, said method being such that:

a) If only the optical losses $L_l$ in the optical fibre spans are known, then the method comprises the following 3 steps:

- Calculation of integration losses for at least a first and a second path between said two points;
- Comparison between said losses;
- Choice of the path that minimizes said losses;

b) If only the optical losses $L_l$ in the optical fibre spans and the maximum allowable input power IP into said spans are known, then the method comprises the following 3 steps:

- Calculation of the Optical Signal to Noise Ratio (OSNR) for at least a first and a second path between said two points assuming that the power injected into each span is equal to the maximum allowable input power;
- Comparison between said signal/noise ratios;
- Choice of the path that maximizes said signal/noise ratios;

c) If only the optical losses $L_l$ in the optical fibre spans are known, the maximum allowable input power IP into said spans and the maximum output power $P_A$ of the amplifiers are known, then the method comprises the following four steps:

- Calculation of the real allowable power in the spans;

- Calculate the signal to noise ratio for at least a first and a second path between said two points assuming that the power injected into each span corresponds to the maximum real allowable power;
- Comparison between said signal/noise ratios;
- Choice of the path maximizing said signal/noise ratios.

Advantageously in case a), a path is composed of N optical fibre spans, each span having an optical loss $P_l$ expressed in dB, the integration losses IL in dB for said path are calculated using the following expression:

$$IL = 10.Log_{10}\left(\sum_{i=1}^{N} 10^{Li/10}\right).$$

Advantageously in case b),

- a path composed of N optical fibre spans, each span having an optical loss $L_l$ expressed in dB, the integration losses IL in dB for said path are calculated using the expression $IL = 10.Log_{10}\left(\sum_{i=1}^{N} 10^{Li/10}\right).$

- the maximum allowable input power IP in an optical fibre is expressed in dBm, the maximum power $P_l$ in the optical path is calculated using the expression $P_l = IP - 10.LogN$;
  The noise figure expressed in dB for a power amplifier is denoted NF, and the signal to noise ratio OSNR is expressed in dB per 0.1 nm, then said OSNR ratio is calculated using the expression $OSNR = P_l - IL - NF + K$, K where K is a constant expressed in dBm and the constant K is equal to approximately 58.

Advantageously in case c),

- a path composed of N optical fibre spans, each span having an optical loss $L_l$ expressed in dB, the integration losses IL in dB for said path are calculated using the expression $IL = 10.Log_{10}\left(\sum_{i=1}^{N} 10^{Li/10}\right).$

- The maximum allowable input power IP into an optical fibre and the maximum amplifier output power $P_A$ are expressed in dBm and if C is the number of multiplexed channels transiting along the path, the maximum power $P_{IFC}$ in the optical path is equal to $IP - 10.LogN$ or $P_A - 10.LogC$, whichever is the least.
  The noise figure expressed in dB for a power amplifier is denoted NF, and the signal to noise ratio OSNR is expressed in dB per 0.1 nm, then said OSNR ratio is calculated using the expression $OSNR = P_l - IL - NF + K$, where the constant K is equal to approximately 58.

The invention will be better understood and other advantages will become clearer after reading the following description given non-limitatively with reference to the appended figures, wherein:

- Figure 1 represents a part of an optical network comprising nodes and spans;
- Figure 2 shows a span between two nodes with an indication of the different elements making up this span;
- Figure 3 shows the flowchart for the method according to the invention.

As already mentioned, the important parameter characterising the path between two nodes is the signal to noise ratio or OSNR. For a span $S_l$, the $OSNR_l$ is given by the optical amplifier $A_l$ of the span. The signal/noise ratio is conventionally calculated for a spectral band $B_f$ with a width of 0.1 nanometres. This spectral width is equal to the wavelength of 1550 nanometers, at a frequency width of 12.5 GHz.
The $OSNR_l$ is calculated in dB. Its expression is equal to:

$$\text{Equation 1: } \quad OSNR_I(dB/nm) = P_{AII}(dBm) - NF_{AI}(dB) + K$$

where

$P_{AII}$: Input power of the optical amplifier $A_l$
$NF_{AI}$: Noise figure of the optical amplifier $A_l$
K: constant equal to $-10.Log(h.\nu.B_f)$ where h = Planck's constant and $\nu$ = optical frequency of the signal.

For optical telecommunications applications operating at a wavelength of 1550 nanometers, K is equal to about 58.
With optical losses for the optical link equal to $L_l$, the input power $P_{AII}$ of the optical amplifier $A_l$ is equal to:

$$\text{Equation 2:} \quad P_{AII}(dBm) = P_{II}(dBm) - L_I(dB)$$

where $P_{II}$: Input power in span $L_I$

Consequently, the OSNR$_I$ is also given by substituting the expression for the input power $P_{AII}$ given by equation 2, in equation 1

$$\text{Equation 3:} \quad OSNR_I(dB/nm) = P_{II}(dBm) - L_I(dB) - NF_{AI}(dB) + K$$

In the following equations, to simplify the presentation, the different units will no longer be indicated, since the powers are all expressed in dBm and the attenuations in dB.

The signal to noise ratio OSNR for a path comprising N spans $S_I$ each with a signal to noise ratio OSNR$_I$ is equal to:

$$1/OSNR = \sum_{i=1}^{N} 1/OSNR_I$$

which can also be written in the following form:

$$\text{Equation 4:} \quad OSNR = 10.Log_{10}\left(\sum_{i=1}^{N} 10^{(P_{II} - L_i - NF_{AI} + K)/10}\right)$$

Using this expression, and depending on knowledge of the optical telecommunications network, several assumptions can be made to simplify the calculation of the OSNR for an optical path.

Assumption A: Only optical losses $L_I$ in optical fibre spans are known.
In this case, it can be considered that:

- the input powers $P_{II}$ in each span $S_I$ are identical and equal to $P_i$;
- the noise figures $NF_{AI}$ of optical amplifiers $A_I$ are identical and equal to $NF_A$.
  Equation 4 can then be written:

$$\text{Equation 5:} \quad OSNR = P_I - NF_A + K - 10.Log_{10}\left(\sum_{i=1}^{N} 10^{L_I/10}\right)$$

that can be put in the form:

$$OSNR = K_A - IL$$

where $K_A$ is a constant independent of the path chosen

and $IL = 10.Log_{10}\left(\sum_{i=1}^{N} 10^{Li/10}\right)$ is dependent on the path chosen and is equal to the integration losses of the path.

Consequently, in assumption A, the signal to noise ratio can be optimised by choosing the path with the lowest integration losses IL, said losses being calculated using the expression in equation 5.

Assumption B: The optical losses $L_I$ in optical fibre spans are known, together with the maximum allowable input power IP in said spans.
In this case, we can write:

$$\text{Equation 6:} \quad P_I = IP - 10 LogN$$

Substituting the expression for $P_I$ given in equation 6 into equation 5, we obtain:

$$\text{Equation 7:} \quad OSNR = IP - 10.LogN - NF_A + K - 10.Log_{10}\left(\sum_{i=1}^{N} 10^{L_I/10}\right)$$

Consequently, in assumption B, the path with the highest OSNR should be chosen, said OSNR being calculated using the expression in equation 7.

Assumption C: Optical losses $L_I$ in optical fibre spans are known, the maximum allowable input power IP in said spans and the maximum output power $P_A$ from the amplifiers are also known.

In this case, the input power into the optical fibres may be limited:

- Either, as in the case of assumption B, by the maximum allowable input power IP;
- Or by the maximum output power $P_A$ from the amplifiers.
   In the first case, the input power into the optical fibres is equal to:

$$\text{Equation 6:} \quad P_I = IP - 10LogN$$

In the second case, the input power into the optical fibres is equal to:

$$\text{Equation 8:} \quad P_I = P_A - 10LogC$$

with C: Number of multiplexed channels circulating in the optical fibre. In fact, in optical fibre spans, the signals are usually multiplexed either in time or spectrally so as to increase the throughput of the span. Therefore the power output by an amplifier is distributed on the C channels transmitted by the optical fibre.

Therefore for each path, we need to determine:

- Firstly, the input power corresponding to the minimum of the expressions given by equations 6 and 8;
- Secondly, this minimum being known, the corresponding signal to noise ratio using equation 5.

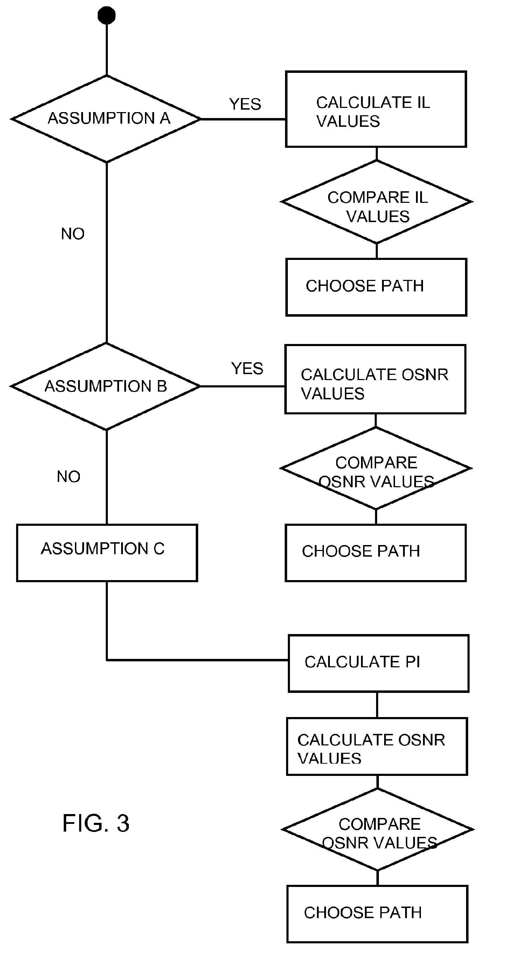

The three assumptions for the method according to the invention are summarized in the flowchart in figure 3. Obviously, the installation of this method in a calculator or in a computer for the purpose of automatically determining the best possible path will not introduce any particular technical problems.

This method has the advantage of making the best use of technical information about a telecommunications network and optimising the choice of a path as a function of knowledge of this information.

## Claims

1. Method of determining a connection path between two points in an optical network comprising several paths to connect said two points, each path comprising optical fibre spans and power amplifiers, said method being such that:

   a) If only the optical losses $L_I$ in the optical fibre spans are known, then the method comprises the following 3 steps:

      • Calculation of integration losses for at least a first and a second path between said two points;
      • Comparison between said losses;
      • Choice of the path that minimizes said losses;

   b) If only the optical losses $L_I$ in the optical fibre spans and the maximum allowable input power IP into said spans are known, then the method comprises the following 3 steps:

      • Calculation of the Optical Signal to Noise Ratio (OSNR) for at least a first and a second path between said two points assuming that the power injected into each span is equal to the maximum allowable input power;

• Comparison between said signal/noise ratios;
• Choice of the path that maximizes said signal/noise ratios;

c) If the optical losses $L_l$ in the optical fibre spans are known, the maximum allowable input power IP into said spans and the maximum output power $P_A$ of the amplifiers are known, then the method comprises the following four steps:

• Calculation of the real allowable power in the spans;
• Calculation of the signal to noise ratio for at least a first and a second path between said two points assuming that the power injected into each span corresponds to the maximum real allowable power;
• Comparison between said signal/noise ratios;
• Choice of the path maximizing said signal/noise ratios.

2. Method of determining a connection path according to case a) in claim 1, **characterised in that** a path is comprising N optical fibre spans, each span having an optical loss $P_l$ expressed in dB, the integration losses IL in dB for said path are calculated using the following expression: $IL = 10.Log_{10}\left(\sum_{i=1}^{N} 10^{Li/10}\right).$

3. Method of determining a connection path according to case b) in claim 1, **characterised in that**:

• a path comprising N optical fibre spans, each span having an optical loss $L_l$ expressed in dB, the integration losses IL in dB for said path are calculated using the expression : $IL = 10.Log_{10}\left(\sum_{i=1}^{N} 10^{Li/10}\right).$
• the maximum allowable input power IP in an optical fibre is expressed in dBm, the maximum power $P_l$ in the optical path is calculated using the expression : $P_l = IP - 10.LogN$ ;
• the noise figure expressed in dB for a power amplifier is denoted NF, and the signal to noise ratio OSNR is expressed in dB per 0.1 nm, then said OSNR ratio is calculated using the expression : $OSNR = P_l - IL - NF + K$, where K is a constant expressed in dBm.

4. Method of determining a connection path according to claim 3, **characterised in that** the constant K is equal to approximately 58.

5. Method of determining a connection path according to case c) in claim 1, **characterised in that**:

• a path comprising N optical fibre spans, each span having an optical loss $L_l$ expressed in dB, the integration losses IL in dB for said path are calculated using the expression: $IL = 10.Log_{10}\left(\sum_{i=1}^{N} 10^{Li/10}\right).$
• The maximum allowable input power IP into an optical fibre and the maximum amplifier output power $P_A$ are expressed in dBm and if C is the number of multiplexed channels transiting along the path, the maximum power $P_{IFC}$ in the optical path is equal to $IP - 10.LogN$ or $P_A -10.LogC,$ whichever is the least;
• The noise figure expressed in dB for a power amplifier is denoted NF, and the signal to noise ratio OSNR is expressed in dB per 0.1 nm, then said OSNR ratio is calculated using the expression : $OSNR = P_l - IL - NF + K.$

6. Method of determining a connection path according to claim 5, **characterised in that** the constant K is equal to approximately 58.

A

C₃

B

C₂

C₁

Nₗ    Sₗ    Nₗ₊₁

# FIG. 1

Fₗ

ATₗ    Pₗₗ    PАₗₗ    Aₗ

Nₗ    Sₗ    Nₗ₊₁

# FIG. 2

FIG. 3

**European Patent
Office**

**EUROPEAN SEARCH REPORT**

Application Number

EP 07 11 3303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 278 325 A (INNOVANCE INC [US]) 22 January 2003 (2003-01-22) * abstract * * column 9, line 52 - column 10, line 7 * * column 10, line 44 - line 54 * * column 11, line 21 - column 12, line 12 * * column 12, line 55 - column 14, line 25 * * claims 1,2,9; figure 2 * | 1-6 | INV. H04B10/00 |
| A | JUKAN A ET AL: "Constraint-based path selection methods for on-demand provisioning in WDM networks" PROCEEDINGS IEEE INFOCOM 2002 CONFERENCE ON COMPUTER COMMUNICATIONS. TWENTY-FIRST ANNUAL JOINT CONFERENCE OF THE IEEE COMPUTER AND COMMUNICATIONS SOCIETIES (CAT. NO.37364) IEEE PISCATAWAY, NJ, USA, vol. 2, 2002, pages 827-836 vol.2, XP002428368 ISBN: 0-7803-7476-2 * abstract * * page 827, column 2, paragraph 3 - page 828, column 1, paragraph 1 * * page 828, column 2, paragraph 6 - page 830, column 2, paragraph 1 * | 1-6 | |
| A | US 2001/046074 A1 (KAKIZAKI SUNAO [JP] ET AL) 29 November 2001 (2001-11-29) * paragraph [0007] * * paragraph [0010] * * paragraph [0031] - paragraph [0041] * * paragraph [0048] - paragraph [0051] * * paragraph [0070] * * paragraph [0076] * | 1-6 | TECHNICAL FIELDS SEARCHED (IPC) H04B H04Q H04J |

The present search report has been drawn up for all claims

| Place of search | Date of completion of the search | Examiner |
|---|---|---|
| The Hague | 7 January 2008 | Vaquero, Raquel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 895 686 A1**

## ANNEX TO THE EUROPEAN SEARCH REPORT
## ON EUROPEAN PATENT APPLICATION NO.

EP 07 11 3303

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2008

| Patent document cited in search report | | Publication date | Patent family member(s) | Publication date |
|---|---|---|---|---|
| EP 1278325 | A | 22-01-2003 | US 2003016410 A1 | 23-01-2003 |
| US 2001046074 | A1 | 29-11-2001 | NONE | |

EPO FORM P0459

For more details about this annex : see Official Journal of the European Patent Office, No. 12/82

10